# EUROPEAN PATENT SPECIFICATION

(11) **EP 2 401 165 B1**
(45) Date of publication and mention of the grant of the patent: **18.06.2014**
(21) Application number: 10746513.0
(22) Date of filing: 11.02.2010
(51) Int. Cl.: B60G 17/017, B60G 17/0195

(54) **SYSTEM AND METHOD FOR REGULATING THE CHASSIS HEIGHT OF A TRACTOR VEHICLE**
SYSTEM UND VERFAHREN ZUR REGULIERUNG DER CHASSISHÖHE EINES ZUGFAHRZEUGS
SYSTÈME ET PROCÉDÉ DE RÉGULATION DE LA HAUTEUR DE CHÂSSIS D'UN VÉHICULE TRACTEUR

(30) Priority: 26.02.2009 SE 0900246
(43) Date of publication of application: 04.01.2012
(73) Proprietor: Scania CV AB (PUBL), 151 87 Södertälje (SE)
(72) Inventor: ASLAN, Daniel, S-145 69 Norsborg (SE); REIMDAL, Roine, S-645 44 Strängnäs (SE)
(86) International application number: PCT/SE2010/050158
(87) International publication number: WO 2010/098713

(56) References cited:
- KR-A- 20030 020 617
- KR-A- 20030 021 439
- US-A- 4 558 886
- US-A- 5 273 308
- US-A- 5 452 919
- US-A1- 2006 082 078
- US-A1- 2007 290 482

## Description

### FIELD OF THE INVENTION AND PRIOR ART

The present invention relates to a system according to the preamble of claim 1 and a method according to the preamble of claim 5 for regulating the chassis height of a tractor vehicle. The invention relates also to a computer programme product comprising computer programme code for implementing a method according to the invention, and to an electronic control unit.

In this description and the claims set out below, the term "trailer" covers both a conventional trailer provided with a coupling means in the form of a drawbar intended to be connected to a coupling means in the form of a towing hook or the like of a tractor vehicle, and a so-called semitrailer provided with a coupling means in the form of a so-called kingpin intended to be connected to a so-called fifth wheel of a tractor vehicle. The present invention is thus applicable both to a tractor vehicle adapted to being connected to and towing a semitrailer provided with a kingpin, and to a tractor vehicle adapted to being connected to and towing a trailer provided with a drawbar. The invention is also applicable to a tractor vehicle adapted to being coupled to and towing a trailer which is provided with other types of coupling means than those indicated above.

A modern tractor vehicle is often provided with an air suspension system which comprises air bellows at the tractor vehicle's rear wheel suspension and sometimes also air bellows at the tractor vehicle's front wheel suspension. Such an air suspension system may be adapted to being controlled by a so-called ELC (electronic level control) system. The ELC system detects the distance in the height direction between the respective wheel shafts and the chassis of the tractor vehicle by means of sensors and can be set to automatically regulate the air pressure in the air bellows of the air suspension system so that the chassis is kept at a height position preset for driving of the tractor vehicle, relative to the wheel shafts, irrespective of the load on the wheel shafts. Such a system in known from document US 2007/290482 A1. When necessary, the driver of the tractor vehicle can increase or reduce the air pressure in the air bellows in order to raise or lower the tractor vehicle's chassis from the preset height position. The driver has usually to effect such raising or lowering of the tractor vehicle's chassis when the tractor vehicle is to be coupled to a trailer, in order thereby to bring the tractor vehicle's coupling means to a height position appropriate to the prevailing height position of the kingpin or drawbar of the freestanding trailer. When the tractor vehicle is at the correct level, the driver reverses it until its coupling means has come into engagement with the trailer's coupling means, after which the driver applies the parking brake and sees to connecting the electrical and pneumatic service lines of the tractor vehicle to corresponding lines of the trailer. After the tractor vehicle has been coupled to the trailer, the driver causes the tractor vehicle's chassis to return to the preset height position appropriate to driving. The tractor vehicle may for example be provided with a manually operable switching means in the form of a push-button or the like in the driving cab, which the driver can activate to cause the chassis to return to the preset height position. It may happen that the driver, particularly if not used to driving the respective tractor vehicle, forgets or neglects to activate such a switching means after the tractor vehicle with the chassis lowered or raised has been coupled to a trailer, resulting in the tractor vehicle being driven with the chassis at an incorrect height position which differs from the preset height position appropriate to driving. Driving the tractor vehicle with the chassis at a height position which is lower than the preset height position entails risk of damage to fenders and other low portions of the tractor vehicle. Driving the tractor vehicle with the chassis at a height position which is higher than the preset height position impairs the stability and hence the driving safety of the tractor vehicle, while at the same time increasing the air resistance and hence the fuel consumption.

### OBJECT OF THE INVENTION

The object of the present invention is to propose a system and method which make it possible to reduce the risk of a tractor vehicle being driven with the chassis at an incorrect height position.

### SUMMARY OF THE INVENTION

According to the present invention, said object is achieved by a system having the features defined in claim 1 and a method having the features defined in claim 5.

According to the invention, the distance in the height direction between a rear wheel shaft and the chassis of the tractor vehicle is adjustable by one or more power means under the control of an electronic control device whereby:
- the control device determines whether a trailer is coupled to the tractor vehicle and whether the tractor vehicle's parking brake is off or not, and
- the control device causes said power means to place the chassis at a distance in the height direction from the rear axle which is predetermined for driving of the tractor vehicle, when the control device has found that the following conditions, possibly in combination with one or more further conditions, are fulfilled:
   - a trailer is coupled to the tractor vehicle, and
   - the tractor vehicle's parking brake is off for the first time since the control device last found that a trailer was coupled to the tractor vehicle.

With the solution according to the invention, the return of the tractor vehicle's chassis to the preset height position appropriate for driving will take place automatically before the driver sets the tractor vehicle in motion after a trailer has been coupled to it. It is thus possible to prevent the tractor vehicle being inadvertently driven with incorrect chassis height after it has been coupled to a trailer.

Other advantageous features of the system and the method according to the invention are indicated by the independent claims and the description set out below.

The invention relates also to a computer programme product having the features defined in claim 9 and to an electronic control unit having the features defined in claim 11.

### BRIEF DESCRIPTION OF THE DRAWINGS

The invention is described below in more detail on the basis of embodiment examples with reference to the attached drawings, in which:
- Fig 1: depicts a side view of a vehicle combination comprising a tractor vehicle and, coupled to the latter, a trailer in the form of a semitrailer,
- Fig 2: depicts a schematic illustration of parts of the tractor vehicle and the trailer according to Fig. 1,
- Fig 3: depicts a schematic diagram of a system according to an embodiment of the present invention,
- Fig 4: depicts a schematic diagram of an electronic control unit for implementing a method according to the invention, and
- Fig 5: depicts a flowchart illustrating a method according to an embodiment of the invention.

### DETAILED DESCRIPTION OF EMBODIMENTS OF THE INVENTION

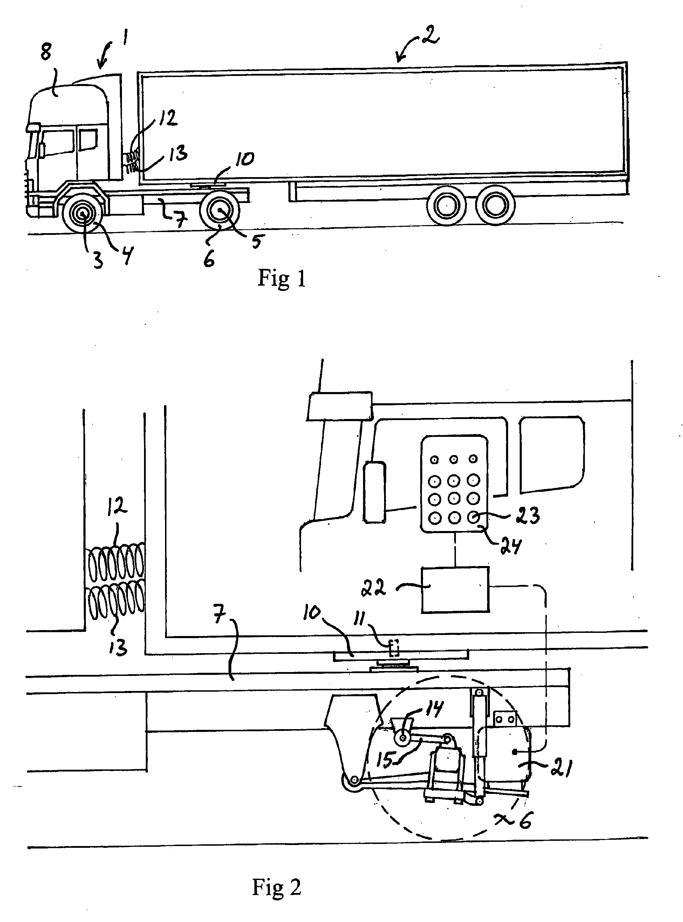

Fig. 1 illustrates schematically a vehicle combination comprising a tractor vehicle 1 and a trailer 2 coupled to the tractor vehicle. The tractor vehicle 1 comprises a forward wheel shaft 3 with two or more wheels 4 and a rear wheel shaft 5 with two or more wheels 6. The tractor vehicle 1 further comprises a chassis 7 supported by said wheels 4, 6. A driving cab 8 is mounted on the chassis 7. A coupling means 10 fitted at the rear end of the chassis 7 cooperates with a corresponding coupling means 11 (see Fig. 2) of the trailer 2. The tractor vehicle 1 is coupled to the trailer 2 by engagement between the tractor vehicle's coupling means 10 and the trailer's coupling means 11.

In the example illustrated, the tractor vehicle's coupling means 10 takes the form of a so-called fifth wheel, whereas the trailer's coupling means 11 takes the form of a so-called kingpin which protrudes downwards from the forward end of the trailer 2. The fifth wheel 10 has a recess extending rearwards to accommodate the kingpin 11. The kingpin 11 is locked firmly in the recess of the fifth wheel 10 by a locking means. The locking means is of conventional configuration and is not depicted in the drawings.

The trailer might alternatively be provided with a coupling means in the form of a drawbar for connection to a coupling means in the form of a towing hook or the like of the tractor vehicle.

Electrical and pneumatic service lines 12, 13 extend between the tractor vehicle 1 and the trailer 2. The electrical and pneumatic service lines 12, 13 of the tractor vehicle 1 are connected to corresponding lines of the trailer 2 by conventional connecting devices. These connecting devices may be manoeuvred manually or automatically for manual or automatic connection of the respective service lines 12, 13 to corresponding lines of the trailer.

At its rear wheel shaft 5, the tractor vehicle 1 is provided with a set of power means 21 by means of which the distance in the height direction between the rear wheel shaft 5 and the chassis 7 of the tractor vehicle is adjustable, and with an electronic control device 22 for controlling said power means 21. At its forward wheel shaft 3, the tractor vehicle 1 might also be provided with a set of power means by means of which the distance in the height direction between the forward wheel shaft 3 and the chassis 7 of the tractor vehicle is adjustable.

Each power means 21 takes the form with advantage of an air bellows, as illustrated in Fig. 2. These air bellows 21 form part of an air suspension system which may be adapted to being controlled by a so-called ELC (electronic level control) system. The ELC system detects the distance in the height direction between the respective wheel shafts 3, 5 and the chassis 7 by means of sensors 14 and may be set to automatically regulate the air pressure in the air suspension system's air bellows 21 so that the chassis 7 is kept at a given height position relative to the wheel shafts 3, 5 irrespective of the load on the wheel shafts. In the example illustrated in Fig. 2, an electrical sensor 14 is fastened in a conventional manner to the tractor vehicle's chassis 7, and is connected to the tractor vehicle's rear wheel shaft via a link arm 15. This sensor 14 makes it possible to determine the distance in the height direction between the rear wheel shaft and the chassis of the tractor vehicle.

By regulating the air pressure in the air bellows 21 at the rear wheel shaft 5, the height of the rear portion of the tractor vehicle's chassis 7 relative to the rear wheel shaft 5 is adjustable and hence the height position of the tractor vehicle's coupling means 10 is also adjusted. By regulating the air pressure in the air bellows (not depicted), if any, at the forward wheel shaft 3, the height of the forward portion of the tractor vehicle's chassis 7 is adjustable relative to the forward wheel shaft 3. The air pressure of said air bellows 21 is regulated by an electronic control device 22 which is itself controllable by the tractor vehicle's driver via manually operable switching means 23 of a switching unit 24. The switching unit 24 may be fitted permanently in the driving cab 8 or be portable. By means of the switching unit 24 the vehicle's driver can cause the control device 22 to alter the height position of the chassis 7 from a value preset for driving of the tractor vehicle, e.g. in order to raise or lower the tractor vehicle's chassis 7 when the tractor vehicle is to be coupled to a freestanding trailer 2, so that the tractor vehicle's coupling means 10 assumes a suitable height position for coupling to the trailer's coupling means 11.

According to the invention, the control device 22 is adapted to determining whether a trailer is coupled to the tractor vehicle 1 and whether the tractor vehicle's parking brake is off or not. The control device 22 is further adapted to automatically causing said power means 21 to place the tractor vehicle's chassis 7 at a distance in the height direction from the rear axle 5 which is predetermined for driving of the tractor vehicle, when the control device has found that the following conditions, possibly in combination with one or more further conditions, are fulfilled:
- a trailer 2 is coupled to the tractor vehicle, and
- the tractor vehicle's parking brake is off for the first time since the control device 22 last found that a trailer was coupled to the tractor vehicle.

In cases where the tractor vehicle 1 is also provided with power means for regulating the distance in the height direction between the chassis 7 and the front axle 3, the control device 22 is also adapted to automatically causing these power means to place the tractor vehicle's chassis 7 at a distance in the height direction from the front axle 3 which is predetermined for driving of the tractor vehicle, when the control device has found that the conditions mentioned above are fulfilled.

In certain cases the trailer 2 is also provided with power means, e.g. in the form of air bellows, by which the distance in the height direction between one or more wheel shafts and the chassis of the trailer is adjustable. In such a case said control device 22 of the tractor vehicle 1 is with advantage also adapted to automatically causing the trailer's power means to place the trailer's chassis at a distance in the height direction from the respective wheel shaft of the trailer which is predetermined for driving, when the control device has found that the conditions mentioned above are fulfilled.

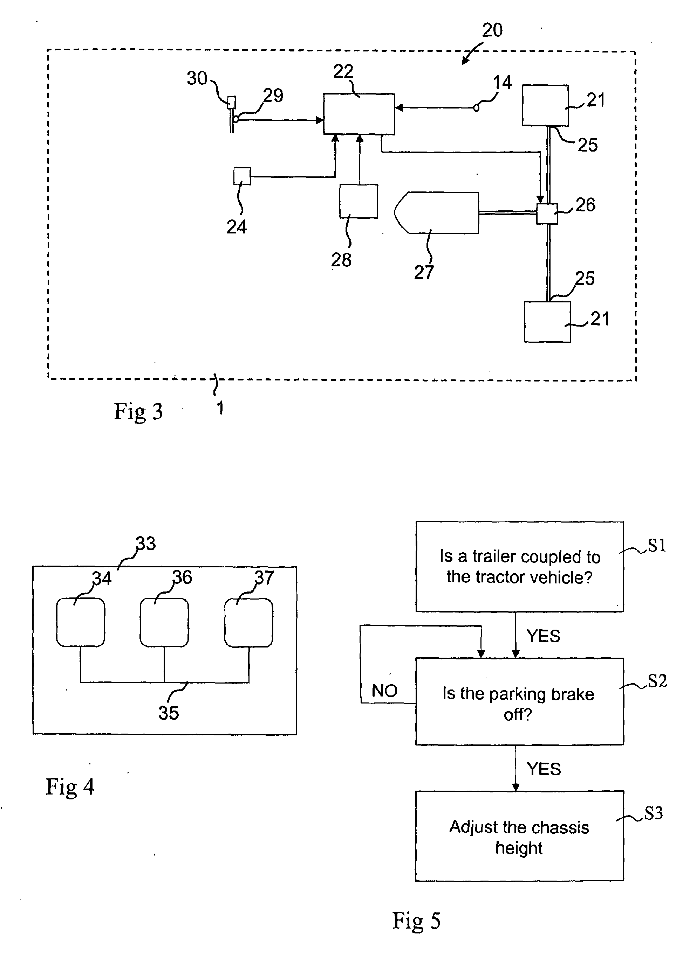

The control device 22 may take the form of a single electronic control unit of the tractor vehicle, as illustrated in Fig. 3, or two or more mutually cooperating electronic control units.

Fig. 3 illustrates schematically a system 20 for regulating the chassis height of a tractor vehicle. In the example illustrated, the system 20 comprises two power means 21 in the form of air bellows which are associated with the tractor vehicle's rear wheel suspension and by which the distance in the height direction between a rear wheel shaft and the chassis of the tractor vehicle is adjustable. In the example illustrated, each air bellows 21 comprises a combined inlet/outlet 25 for input of compressed air to the air bellows and output of compressed air from the air bellows. The inlet/outlet 25 of the air bellows is connectable via a regulating valve 26 to a compressed air container 27 to make it possible to supply compressed air to the air bellows 21 from the compressed air container when the distance in the height direction between the tractor vehicle's chassis 7 and the rear wheel shaft 5 is to be increased. The inlet/outlet 25 of the air bellows is also connectable to the surroundings via the regulating valve 26 to make it possible to discharge air from the air bellows 21 when the distance in the height direction between the tractor vehicle's chassis 7 and the rear wheel shaft 5 is to be reduced. Alternatively, each air bellows 21 might be provided with a separate inlet and a separate outlet which are connectable respectively to the compressed air container and the surroundings via respective regulating valves. The electronic control device 22 which forms part of the system 20 is adapted to sending control signals to the regulating valve 26 in order to regulate the airflow to and from the air bellows 21 and thereby regulate the height position of the tractor vehicle's chassis.

As mentioned above, the control device 22 is adapted to determining whether a trailer is connected to the tractor vehicle. Various different ways of detecting whether a trailer is connected to the tractor vehicle are conceivable. This detection is with advantage based on information received from sensors and other equipment conventionally provided on modern tractor vehicles. In an embodiment of the invention, the control device 22 may be adapted to finding that a trailer is connected to the tractor vehicle when the control device receives information which indicates that the tractor vehicle is electrically connected to a trailer, i.e. that the tractor vehicle's electrical service line 12 is connected to the trailer. Such information may for example be generated by detecting current on the electric power offtake to lamps situated on the trailer. Absence of current on this electric power offtake will indicate that the tractor vehicle's electric service line 12 is disconnected from the trailer's electrical system, whereas presence of current on this electric power offtake will indicate that the tractor vehicle's electric service line 12 is connected to the trailer's electrical system. The control device 22 might alternatively be adapted to finding that a trailer is connected to the tractor vehicle when the control device receives information which indicates that a brake control unit 28 of the tractor vehicle receives signals from a brake control unit of a trailer. According to another alternative, the control device 22 might be adapted to finding that a trailer is connected to the tractor vehicle when the control device receives information which indicates that the ELC system of the tractor vehicle receives signals from a trailer. According to a further alternative, the control device 22 might be adapted to finding that a trailer is connected to the tractor vehicle when the control device receives information from a detection device which indicates that a locking device for the coupling means of the tractor vehicle and a trailer has been caused to adopt its locking position. Other ways of detecting that a trailer is connected to the tractor vehicle are also conceivable.

The control device 22 may be adapted to receiving information which makes it possible to determine the state of the tractor vehicle's parking brake, i.e. whether the parking brake is off or not, directly from a sensor 29 adapted to detecting the application and release of the parking brake, or from an electronic control unit connected to such a sensor. Such a sensor 29 may for example, as illustrated in Fig. 3, be adapted to detecting the position of the control lever 30 by means of which the driver applies and releases the parking brake. The application and release of the parking brake may also be detected in other ways known to one skilled in the art.

Fig. 5 depicts a flowchart illustrating an embodiment of a method according to the present invention for regulating the chassis height of a tractor vehicle. A first step S1 determines whether a trailer is connected to the tractor vehicle. A second step S2 determines whether the tractor vehicle's parking brake is off or not. If step S1 finds that a trailer is connected to the tractor vehicle and step S2 that the tractor vehicle's parking brake is off, a subsequent step S3 causes power means of the tractor vehicle to place the tractor vehicle's chassis at a distance in height from the tractor vehicle's rear axle which is predetermined for driving of the tractor vehicle. If said second step S2 finds that the parking brake is not off, this step S2 is repeated after a certain time lag.

Computer programme code for implementing a method according to the invention is with advantage included in a computer programme which can be read into the internal memory of a computer, e.g. the internal memory of an electronic control unit of a tractor vehicle. Such a computer programme is with advantage provided via a computer programme product comprising a data storage medium which is readable by an electronic control unit and which has the computer programme stored on it. Said data storage medium is for example an optical data storage medium in the form of a CD ROM disc, a DVD disc etc, a magnetic data storage medium in the form of a hard disc, a diskette, a cassette tape etc, or a flash memory or a memory of the ROM, PROM, EPROM or EEPROM type.

A computer programme according to an embodiment of the invention comprises computer programme code for causing an electronic control device in a tractor vehicle, which tractor vehicle is provided with one or more power means by means of which the distance in the height direction between a rear wheel shaft and the chassis of the tractor vehicle is adjustable, to:
- determine whether a trailer is coupled to the tractor vehicle,
- determine whether the tractor vehicle's parking brake is off or not, and
- control said power means in such a way that the chassis is placed at a distance in the height direction from the rear axle which is predetermined for driving of the tractor vehicle, when the control device has found that the following conditions, possibly in combination with one or more further conditions, are fulfilled:
   - a trailer is coupled to the tractor vehicle, and
   - the tractor vehicle's parking brake is off for the first time since the control device last found that a trailer was coupled to the tractor vehicle.

Fig. 4 illustrates very schematically an electronic control unit 33 comprising an execution means 34, e.g. a central processor unit (CPU), for execution of computer software. The execution means 34 communicates with a memory 36, e.g. of the RAM type, via a databus 35. The control unit 33 comprises also a data storage medium 37, e.g. in the form of a flash memory or a memory of the ROM, PROM, EPROM or EEPROM type. The execution means 34 communicates with the data storage means 37 via the databus 35. A computer programme comprising computer programme code for implementing a method according to the invention, e.g. in accordance with the embodiment illustrated in Fig. 5, is stored on the data storage medium 37.

The invention is of course in no way limited to the embodiments described above, since a multiplicity of possibilities for modifications thereof are likely to be obvious to a specialist in the field without having for that purpose to deviate from the basic concept of the invention such as defined in the attached claims.

## Claims

1. A system for regulating the chassis height of a tractor vehicle, which system comprises one or more power means (21) by which the distance in the height direction between a rear wheel shaft and the chassis of the tractor vehicle is adjustable, and an electronic control device (22) for controlling said power means (21), **characterised:**
- **in that** the control device (22) is adapted to determining whether a trailer is connected to the tractor vehicle and whether the tractor vehicle's parking brake is off or not, and
- **in that** the control device (22) is adapted to causing said power means (21) to place the chassis at a distance in the height direction from the rear axle which is predetermined for driving of the tractor vehicle, when the control device has found that the following conditions, possibly in combination with one or more further conditions, are fulfilled:
• a trailer is coupled to the tractor vehicle, and
• the tractor vehicle's parking brake is off for the first time since the control device last found that a trailer was coupled to the tractor vehicle.

2. A system according to claim 1, **characterised in that** the control device (22) is adapted to finding that a trailer is connected to the tractor vehicle when the control device receives information which indicates that the tractor vehicle is electrically connected to a trailer.

3. A system according to claim 1, **characterised in that** the control device (22) is adapted to finding that a trailer is connected to the tractor vehicle when the control device receives information which indicates that a brake control unit of the tractor vehicle has been caused to receive signals from a brake control unit of a trailer.

4. A system according to any one of claims 1-3, **characterised in that** each power means (21) takes the form of an air bellows and the control device (22) is adapted to regulating the air pressure in the respective air bellows and hence the distance in the height direction between the rear wheel shaft and the chassis.

5. A method for regulating the chassis height of a tractor vehicle (1) which is provided with one or more power means (21) by which the distance in the height direction between a rear wheel shaft (5) and the chassis (7) of the tractor vehicle is adjustable, and an electronic control device (22) for controlling said power means (21), **characterised:**
- **in that** the control device (22) determines whether a trailer (2) is connected to the tractor vehicle (1) and whether the tractor vehicle's parking brake is off or not, and
- **in that** the control device (22) causes said power means (21) to place the chassis (7) at a distance in the height direction from the rear axle (5) which is predetermined for driving of the tractor vehicle, when the control device has found that the following conditions, possibly in combination with one or more further conditions, are fulfilled:
• the trailer (2) is coupled to the tractor vehicle (1),
• the tractor vehicle's parking brake is off for the first time since the control device (22) last found that a trailer was coupled to the tractor vehicle.

6. A method according to claim 5, **characterised in that** the control device (22) finds that a trailer (2) coupled to the tractor vehicle (1) when the control device receives information which indicates that the tractor vehicle is electrically connected to a trailer.

7. A method according to claim 6, **characterised in that** the control device (22) finds that a trailer (2) is coupled to the tractor vehicle (1) when the control device receives information which indicates that a brake control unit (28) of the tractor vehicle has been caused to receive signals from a brake control unit of a trailer.

8. A method according to any one of claims 5-7, **characterised in that** each power means (21) takes the form of an air bellows and the control device (22) regulates the air pressure in the respective air bellows and hence the distance in the height direction between the rear wheel shaft (5) and the chassis (7)

9. A computer programme product comprising computer programme code for causing an electronic control device in a tractor vehicle (1), which tractor vehicle (1) is provided with one or more power means (21) by means of which the distance in the height direction between a rear wheel shaft (5) and the chassis (7) of the tractor vehicle is adjustable, to:
- determine whether a trailer (2) is coupled to the tractor vehicle,
- determine whether the tractor vehicle's parking brake is off or not, and
- control said power means (21) in such a way that the chassis (7) is placed at a distance in the height direction from the rear axle (5) which is predetermined for driving of the tractor vehicle, when the control device (22) has found that the following conditions, possibly in combination with one or more further conditions, are fulfilled:
• a trailer (2) is coupled to the tractor vehicle (1), and
• the tractor vehicle's parking brake is off for the first time since the control device (22) last found that a trailer was coupled to the tractor vehicle.

10. A computer programme product according to claim 9, **characterised in that** the computer programme product comprises a data storage system (37) readable by an electronic control unit, said computer programme code being stored on the data storage medium.

11. An electronic control unit of a tractor vehicle comprising an execution means (34), a memory (36) connected to the execution means, and a data storage medium (37) connected to the execution means, computer programme code of a computer programme product according to claim 9 being stored on said storage medium (37).

## Patentansprüche

1. System zum Einstellen der Chassishöhe eines Zugfahrzeugs, wobei das System ein oder mehrere Kraftglieder (21), durch welche der Abstand in Höhenrichtung zwischen einer Hinterradwelle und dem Chassis des Zugfahrzeugs einstellbar ist, und eine elektronische Steuervorrichtung (22) zum Steuern der Kraftglieder (21) umfasst, **dadurch gekennzeichnet, dass**
- die Steuervorrichtung (22) ausgebildet ist, um zu bestimmen, ob ein Anhänger mit dem Zugfahrzeug verbunden ist und ob die Feststellbremse des Zugfahrzeugs ausgeschaltet ist oder nicht, und
- die Steuervorrichtung (22) ausgebildet ist, die Kraftglieder (21) zu veranlassen, das Chassis in einem Abstand in Höhenrichtung von der Hinterachse anzuordnen, welcher zum Fahren des Zugfahrzeugs vorbestimmt ist, wenn die Steuervorrichtung festgestellt hat, dass die folgenden Bedingungen, gegebenenfalls in Verbindung mit einer oder mehreren weiteren Bedingungen, erfüllt sind:
- ein Anhänger ist an das Zugfahrzeug gekoppelt, und
- die Feststellbremse des Zugfahrzeugs ist zum ersten Mal seit der letzten Feststellung der Steuervorrichtung, dass ein Anhänger an das Zugfahrzeug gekoppelt war, ausgeschaltet.

2. System nach Anspruch 1, **dadurch gekennzeichnet, dass** die Steuervorrichtung (22) ausgebildet ist, um festzustellen, dass ein Anhänger mit dem Zugfahrzeug verbunden ist, wenn die Steuervorrichtung Informationen erhält, welche andeuten, dass das Zugfahrzeug elektrisch mit einem Anhänger verbunden ist.

3. System nach Anspruch 1, **dadurch gekennzeichnet, dass** die Steuervorrichtung (22) ausgebildet ist, um festzustellen, dass ein Anhänger mit dem Zugfahrzeug verbunden ist, wenn die Steuervorrichtung Informationen erhält, welche andeuten, dass eine Bremssteuereinheit des Zugfahrzeugs veranlasst wurde, Signale von einer Bremssteuereinheit eines Anhängers zu empfangen.

4. System nach einem der Ansprüche 1 bis 3, **dadurch gekennzeichnet, dass** jedes Kraftglied (21) die Form eines Luftbalgs aufweist und die Steuervorrichtung (22) zum Regeln des Luftdrucks im jeweiligen Luftbalg und somit des Abstands in Höhenrichtung zwischen der Hinterradwelle und dem Chassis ausgebildet ist.

5. Verfahren zum Einstellen der Chassishöhe eines Zugfahrzeugs (1), welches mit einem oder mehreren Kraftgliedern (21), durch welche der Abstand in Höhenrichtung zwischen einer Hinterradwelle (5) und dem Chassis (7) des Zugfahrzeugs einstellbar ist, und einer elektronischen Steuervorrichtung (22) zum Steuern der Kraftglieder (21) ausgestattet ist, **dadurch gekennzeichnet, dass**
- die Steuervorrichtung (22) bestimmt, ob ein Anhänger (2) mit dem Zugfahrzeug (1) verbunden ist und ob die Feststellbremse des Zugfahrzeugs ausgeschaltet ist oder nicht, und
- die Steuervorrichtung (22) die Kraftglieder (21) veranlasst, das Chassis (7) in einem Abstand in Höhenrichtung von der Hinterachse (5) anzuordnen, welcher zum Fahren des Zugfahrzeugs vorbestimmt ist, wenn die Steuervorrichtung festgestellt hat, dass die folgenden Bedingungen, gegebenenfalls in Verbindung mit einer oder mehreren weiteren Bedingungen, erfüllt sind:
- ein Anhänger (2) ist an das Zugfahrzeug (1) gekoppelt, und
- die Feststellbremse des Zugfahrzeugs ist zum ersten Mal seit der letzten Feststellung der Steuervorrichtung (22), dass ein Anhänger an das Zugfahrzeug gekoppelt war, ausgeschaltet.

6. Verfahren nach Anspruch 5, **dadurch gekennzeichnet, dass** die Steuervorrichtung (22) feststellt, dass ein Anhänger (2) an das Zugfahrzeug (1) gekoppelt ist, wenn die Steuervorrichtung Informationen erhält, welche andeuten, dass das Zugfahrzeug elektrisch mit einem Anhänger verbunden ist.

7. Verfahren nach Anspruch 6, **dadurch gekennzeichnet, dass** die Steuervorrichtung (22) feststellt, dass ein Anhänger (2) an das Zugfahrzeug (1) gekoppelt ist, wenn die Steuervorrichtung Informationen erhält, welche andeuten, dass eine Bremssteuereinheit (28) des Zugfahrzeugs veranlasst wurde, Signale von einer Bremssteuereinheit eines Anhängers zu empfangen.

8. Verfahren nach einem der Ansprüche 5 bis 7, **dadurch gekennzeichnet, dass** jedes Kraftglied (21) die Form eines Luftbalgs aufweist und die Steuervorrichtung (22) den Luftdruck im jeweiligen Luftbalg und somit den Abstand in Höhenrichtung zwischen der Hinterradwelle und dem Chassis regelt.

9. Computerprogrammprodukt, welches Computerprogrammcode zum Veranlassen einer elektronischen Steuervorrichtung in einem Zugfahrzeug (1) umfasst, wobei das Zugfahrzeug (1) mit einem oder mehreren Kraftgliedern (21) ausgestattet ist, durch welche der Abstand in Höhenrichtung zwischen einer Hinterradwelle (5) und dem Chassis (7) des Zugfahrzeugs einstellbar ist, um:
- zu bestimmen, ob ein Anhänger (2) an das Zugfahrzeug gekoppelt ist,
- zu bestimmen, ob die Feststellbremse des Zugfahrzeugs ausgeschaltet ist oder nicht, und
- die Kraftglieder (21) derart zu steuern, dass das Chassis (7) in einem Abstand in Höhenrichtung von der Hinterachse (5) angeordnet wird, welcher zum Fahren des Zugfahrzeugs vorbestimmt ist, wenn die Steuervorrichtung (22) festgestellt hat, dass die folgenden Bedingungen, gegebenenfalls in Verbindung mit einer oder mehreren weiteren Bedingungen, erfüllt sind:
- ein Anhänger (2) ist an das Zugfahrzeug (1) gekoppelt, und
- die Feststellbremse des Zugfahrzeugs ist zum ersten Mal seit der letzten Feststellung der Steuervorrichtung (22), dass ein Anhänger an das Zugfahrzeug gekoppelt war, ausgeschaltet.

10. Computerprogrammprodukt nach Anspruch 9, **dadurch gekennzeichnet, dass** das Computerprogrammprodukt ein Datenspeichersystem (37) umfasst, welches von einer elektronischen Steuereinheit lesbar ist, wobei der Computerprogrammcode auf dem Datenspeichermedium gespeichert ist.

11. Elektronische Steuereinheit eines Kraftfahrzeugs, umfassend Ausführungsmittel (34), einen Speicher (36), welcher mit dem Ausführungsmittel verbunden ist, und ein Datenspeichermedium (37), welches mit dem Ausführungsmittel verbunden ist, wobei Computerprogrammcode eines Computerprogrammprodukts nach Anspruch 9 auf dem Speichermedium (37) gespeichert ist.

## Revendications

1. Système pour réguler la hauteur de châssis d'un véhicule tracteur, lequel système comprend un ou plusieurs moyens mécaniques (21) par lesquels la distance dans la direction de la hauteur entre un essieu arrière et le châssis du véhicule tracteur peut être ajustée, et un dispositif de commande électronique (22) pour commander lesdits moyens mécaniques (21), **caractérisé :**
- **en ce que** le dispositif de commande (22) est adapté pour déterminer si une remorque est connectée au véhicule tracteur et si le frein de stationnement du véhicule tracteur est désengagé ou non, et
- **en ce que** le dispositif de commande (22) est adapté pour amener lesdits moyens mécaniques (21) à placer le châssis à une distance dans la direction de la hauteur par rapport à l'essieu arrière qui est prédéterminée pour la conduite du véhicule tracteur, lorsque le dispositif de commande a trouvé que les conditions suivantes, éventuellement en combinaison avec une ou plusieurs conditions supplémentaires, sont satisfaites :
• une remorque est couplée au véhicule tracteur, et
• le frein de stationnement du véhicule tracteur est désengagé pour la première fois depuis la dernière fois où le dispositif de commande a trouvé qu'une remorque avait été couplée au véhicule tracteur.

2. Système selon la revendication 1, **caractérisé en ce que** le dispositif de commande (22) est adapté pour trouver qu'une remorque est connectée au véhicule tracteur lorsque le dispositif de commande reçoit une information indiquant que le véhicule tracteur est électriquement connecté à une remorque.

3. Système selon la revendication 1, **caractérisé en ce que** le dispositif de commande (22) est adapté pour trouver qu'une remorque est connectée au véhicule tracteur lorsque le dispositif de commande reçoit une information indiquant qu'une unité de commande de frein du véhicule tracteur a été amenée à recevoir des signaux en provenance d'une unité de commande de frein d'une remorque.

4. Système selon l'une quelconque des revendications 1 à 3, **caractérisé en ce que** chaque moyen mécanique (21) se présente sous la forme d'un soufflet pneumatique et le dispositif de commande (22) est adapté pour réguler la pression d'air dans les soufflets pneumatiques respectifs et donc la distance dans la direction de la hauteur entre l'essieu arrière et le châssis.

5. Procédé pour réguler la hauteur de châssis d'un véhicule tracteur (1) qui est pourvu d'un ou plusieurs moyens mécaniques (21) par lesquels la distance dans la direction de la hauteur entre un essieu arrière (5) et le châssis (7) du véhicule tracteur peut être ajustée, et un dispositif de commande électronique (22) pour commander lesdits moyens mécaniques (21), **caractérisé :**
- **en ce que** le dispositif de commande (22) détermine si une remorque (2) est connectée au véhicule tracteur (1) et si le frein de stationnement du véhicule tracteur est désengagé ou non, et
- **en ce que** le dispositif de commande (22) amène lesdits moyens mécaniques (21) à placer le châssis (7) à une distance dans la direction de la hauteur par rapport à l'essieu arrière (5) qui est prédéterminée pour la conduite du véhicule tracteur, lorsque le dispositif de commande a trouvé que les conditions suivantes, éventuellement en combinaison avec une ou plusieurs conditions supplémentaires, sont satisfaites :
• la remorque (2) est couplée au véhicule tracteur (1),
• le frein de stationnement du véhicule tracteur est désengagé pour la première fois depuis la dernière fois où le dispositif de commande (22) a trouvé qu'une remorque avait été couplée au véhicule tracteur.

6. Procédé selon la revendication 5, **caractérisé en ce que** le dispositif de commande (22) trouve qu'une remorque (2) est couplée au véhicule tracteur (1) lorsque le dispositif de commande reçoit une information indiquant que le véhicule tracteur est électriquement connecté à une remorque.

7. Procédé selon la revendication 6, **caractérisé en ce que** le dispositif de commande (22) trouve qu'une remorque (2) est couplée au véhicule tracteur (1) lorsque le dispositif de commande reçoit une information indiquant qu'une unité de commande de frein (28) du véhicule tracteur a été amenée à recevoir des signaux en provenance d'une unité de commande de frein d'une remorque.

8. Procédé selon l'une quelconque des revendications 5 à 7, **caractérisé en ce que** chaque moyen mécanique (21) se présente sous la forme d'un soufflet pneumatique et le dispositif de commande (22) régule la pression d'air dans les soufflets pneumatiques respectifs et donc la distance dans la direction de la hauteur entre l'essieu arrière (5) et le châssis (7).

9. Produit de programme informatique comprenant un code de programme informatique pour amener un dispositif de commande électronique dans un véhicule tracteur (1), lequel véhicule tracteur (1) est pourvu d'un ou plusieurs moyens mécaniques (21) par lesquels la distance dans la direction de la hauteur entre un essieu arrière (5) et le châssis (7) du véhicule tracteur peut être ajustée, à :
- déterminer si une remorque (2) est couplée au véhicule tracteur,
- déterminer si le frein de stationnement du véhicule tracteur est désengagé ou non, et
- commander lesdits moyens mécaniques (21) de telle sorte que le châssis (7) soit placé à une distance dans la direction de la hauteur par rapport à l'essieu arrière (5) qui est prédéterminée pour la conduite du véhicule tracteur, lorsque le dispositif de commande (22) a trouvé que les conditions suivantes, éventuellement en combinaison avec une ou plusieurs conditions supplémentaires, sont satisfaites :
• une remorque (2) est couplée au véhicule tracteur (1), et
• le frein de stationnement du véhicule tracteur est désengagé pour la première fois depuis la dernière fois où le dispositif de commande (22) a trouvé qu'une remorque avait été couplée au véhicule tracteur.

10. Produit de programme informatique selon la revendication 9, **caractérisé en ce que** le produit de programme informatique comprend un système de stockage de données (37) pouvant être lu par une unité de commande électronique, ledit code de programme informatique étant stocké sur le support de stockage de données.

11. Unité de commande électronique d'un véhicule tracteur comprenant des moyens d'exécution (34), une mémoire (36) connectée aux moyens d'exécution, et un support de stockage de données (37) connecté aux moyens d'exécution, un code de programme informatique d'un produit de programme informatique selon la revendication 9 étant stocké sur ledit support de stockage (37).
